# EUROPÄISCHE PATENTANMELDUNG

(11) **EP 1 278 356 A2**
(43) Veröffentlichungstag der Anmeldung: **22.01.2003**
(21) Anmeldenummer: 02010901.3
(22) Anmeldetag: 16.05.2002
(51) Int. Cl.: H04M 1/60, B60R 11/02

(54) **Anschlusseinheit für eine Freisprecheinrichtung**

(30) Priorität: 20.07.2001 DE 10134655
(71) Anmelder: Bisplinghoff, Gisela, 33758 Schloss Holte-Stuckenbrock (DE)
(72) Erfinder: Bisplinghoff, Gisela, 33758 Schloss Holte-Stuckenbrock (DE)
(74) Vertreter: Dantz, Jan Henning

(57) **Zusammenfassung**

Eine Anschlußeinheit für eine Freisprecheinrichtung, insbesondere für Fahrzeuge, umfasst eine in einem Fahrzeug montierbare Box (1), die über Leitungen mit einem Audiosystem, einer Antenne und einer Versorgungsquelle verbindbar ist und entsprechende Kontaktelemente aufweist, wobei ein mobiltelefonspezifischer Stecker (2) mit den Kontaktelementen der Box (1) verbindbar ist, und der Stecker (2) über Leitungen (3) mit einem Telefonhalter (4) verbunden ist. Mit der erfindungsgemäßen Anschlußeinheit können so Fahrzeughersteller ein Fahrzeug durch den Einbau der Box für den Betrieb einer Freisprecheinrichtung vorrüsten, unabhängig davon welchen Typ eines Mobiltelefons der Fahrer später einmal einsetzen will.

## Beschreibung

Die vorliegende Erfindung betrifft eine Anschlußeinheit für eine Freisprecheinrichtung, insbesondere für Fahrzeuge, mit einem in einem Fahrzeug montierbaren Box, die über Leitungen mit einem Audiosystem, einer Antenne und einer Versorgungsquelle verbindbar ist und entsprechende Kontaktelemente aufweist.

Es sind Freisprecheinrichtungen für Fahrzeuge bekannt, bei denen ein Telefonhalter über einen Anschlußstecker mit einer Elektronikbox verbindbar ist. Diese Elektronikbox umfasst eine Platine und ist über einzelne Stecker mit einem Audio-System eines Fahrzeuges, einer Antenne sowie einer Versorgungsleitung verbunden. Bei den bekannten Freisprecheinrichtungen besteht der Nachteil, dass der Telefonhalter sowie die Elektronikbox auf das jeweilige Mobiltelefon abgestimmt sein müssen, d.h. es ist eine für das Mobiltelefon angepasste Übertragung der einzelnen Signale erforderlich. Dies führt zu dem Problem, dass bei einem Wechsel des Mobiltelefons eine komplett neue Freisprecheinrichtung in das Fahrzeug eingebaut werden muß. Da die Lebensdauer eines Fahrzeuges länger als diejenige eines Mobiltelefons ist, muß der Besitzer eines Fahrzeuges beim Kauf eines neuen Mobiltelefons hohe Folgekosten für eine neue Freisprecheinrichtung akzeptieren. Ferner ist es mit den bekannten Freisprecheinrichtungen nicht möglich, unterschiedliche Typen von Mobiltelefonen, beispielsweise verschiedener Hersteller anzuschließen. Dies ist auch deshalb ein Nachteil, da ein Fahrzeug häufig von anderen Personen genutzt wird, die unterschiedliche Mobiltelefone besitzen.

Der Erfindung liegt daher die Aufgabe zu Grunde, eine Anschlußeinheit für eine Freisprecheinrichtung zu schaffen, die universell für verschiedene Typen von Mobiltelefonen eingesetzt werden kann und die zumindest teilweise von einem Fahrzeughersteller schon in ein Fahrzeug eingebaut werden kann.

Diese Aufgabe wird mit einer Anschlußeinheit mit den Merkmalen des Anspruches 1 gelöst.

Erfindungsgemäß ist ein mobiltelefonspezifischer Stecker der Anschlußeinheit mit den Kontaktelementen der Box verbindbar, wobei der Stecker über Leitungen mit einem Telefonhalter verbunden ist. Dadurch kann die universell einsetzbare Box der Anschlußeinheit schon in ein Fahrzeug eingebaut werden, da die für ein Mobiltelefon spezifischen Bauteile, wie der Telefonhalter und eine Elektronikeinheit zur Verarbeitung der Signale losgelöst von der Box erworben und eingebaut werden können. Die erforderliche Elektronik ist dabei in dem Stecker integriert und an das jeweilige Mobiltelefon angepaßt. Der Betreiber kann so auf einfache Weise den mit dem Telefonhalter verbundenen Stecker an die Box anschließen und die Freisprecheinrichtung des Fahrzeuges nutzen. Mit der erfindungsgemäßen Anschlußeinheit können so Fahrzeughersteller ein Fahrzeug durch den Einbau der Box für den Betrieb einer Freisprecheinrichtung vorrüsten, unabhängig davon welchen Typ eines Mobiltelefons der Fahrer später einmal einsetzen will. Dabei ist es auch möglich, dass bei einem Fahrerwechsel ein Stecker für ein anderes Mobiltelefon in die Box eingefügt wird und so die Freisprecheinrichtung universell für andere Typen von Mobiltelefone genutzt werden kann.

Gemäß einer bevorzugten Ausführungsform der Erfindung ist der Stecker im wesentlichen formschlüssig in der Box aufgenommen. Dadurch wird können einerseits die Kontaktelemente am Stecker und an der Box geschützt angeordnet werden, um eine Verunreinigung durch Schmutz zu vermeiden und andererseits wird eine zuverlässige mechanische Verbindung zwischen Box und Stecker erhalten. Vorzugsweise ist dabei die Box kastenförmig mit einer offenen Stirnseite ausgebildet ist, in die der Stecker einfügbar ist, wobei die Kontaktelemente der Box an der der offenen Stirnseite gegenüberliegenden Seite angeordnet sind.

Um für die einzelnen Leitungen eine einfache und schnelle Kontaktierung zu ermöglichen, ist an der Box zum Anschluß der Leitungen eine Anschlußleiste, vorzugsweise in der Form eines 24-poligen Steckers, vorgesehen. Eine solche Anschlußleiste kann nach innen gewandt zur Kontaktierung der Kontaktelemente des Steckers und/oder nach außen gewandt zum Anschluß von Leitungen zur Verbindung mit einer Versorgungsleitung, einer Antenne und dem Audio-System des Fahrzeuges vorgesehen sein.

Für ein leichtgängiges Einschieben des Steckers ist vorzugsweise an der Box oder dem Stecker mindestens eine in Einschubrichtung verlaufende Führungsleiste vorgesehen, die in eine gegenüberliegende an dem Stecker oder der Box angeordnete Führungsnut eingreift. Wenn der Stecker dabei senkrecht zur Einschubrichtung eine asymmetrische Querschnittsform aufweist, wird ein fehlerhaftes Einfügen des Stekkers in die Box ausgeschlossen und ein zuverlässiges Herstellen der richtigen Kontakte gewährleistet.

Gemäß einer weiteren Ausführungsform der Erfindung ist der Stecker an der Box verriegelbar gehalten, so dass ein unbeabsichtigtes Lösen des Steckers, beispielsweise durch bei der Fahrt entstehende Vibrationen vermieden wird. Die Verriegelung kann mittels Rändelschrauben, Rastmechanismen oder anderer Befestigungselemente erfolgen.

Ferner kann die erfindungsgemäße Anschlußeinheit der Freisprecheinrichtung mit dem Audio-System des Fahrzeuges gekoppelt sein. Dies hat den Vorteil, dass durch die universell einsetzbare Box die Freisprecheinrichtung des Fahrzeuges durch unterschiedliche Mobiltelefone genutzt werden kann. Der Nutzer muß lediglich den für sein Mobiltelfon erforderlichen Stecker und den Telefonhalter im Fahrzeug montieren und braucht ansonsten keine Anpassung vorzunehmen. Die Montage kann dabei ggfs. ohne Werkzeug auch vom technischen Laien ausgeführt werden.

Vorzugsweise ist die Box der Anschlußeinheit in einem Handschuhfach des Fahrzeuges montiert und somit für Fahrzeuginsassen im nicht sichtbaren Bereich angeordnet. Es ist auch möglich, die Box in einer im Fahrzeug montierten Aufnahme vorzusehen, die bei fehlender Benutzung verschlossen werden kann. Die Montage im Handschuhfach hat jedoch den Vorteil, dass die Anschlußeinheit mit dem Telefonhalter abschließbar in dem Handschuhfach aufgenommen sein kann. Für die Benutzung wird dann der Telefonhalter in dem Fahrzeug beispielsweise mittels eines Rastmechanismusses montiert, wobei an dem Handschuhfach eine Durchführung für die Leitungen zur Verbindung mit dem Stecker vorgesehen ist.

Die Erfindung wird nachfolgend anhand eines Ausführungsbeispieles mit Bezug auf die beigefügten Zeichnungen näher erläutert. Es zeigen:
- Fig. 1: eine perspektivische Ansicht eines Ausführungsbeispieles einer erfindungsgemäßen Anschlußeinheit;

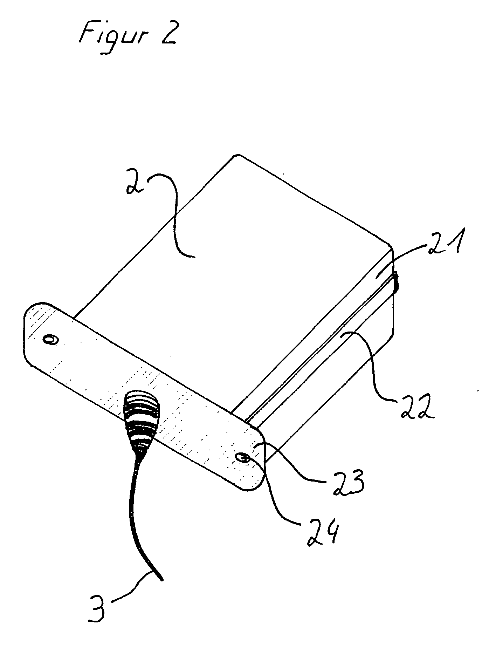

- Fig. 2: eine perspektivische Ansicht des Steckers der Anschlußeinheit der Fig. 1;

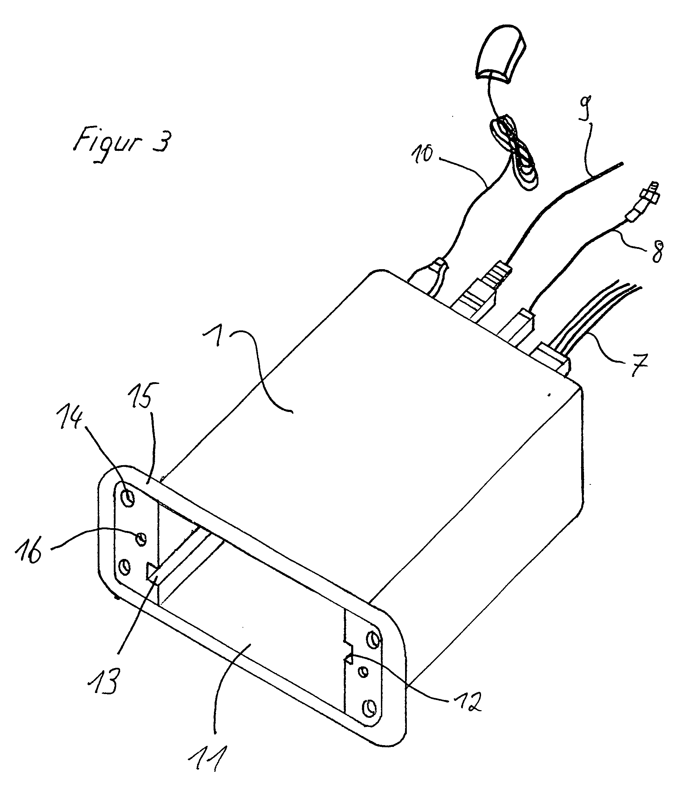

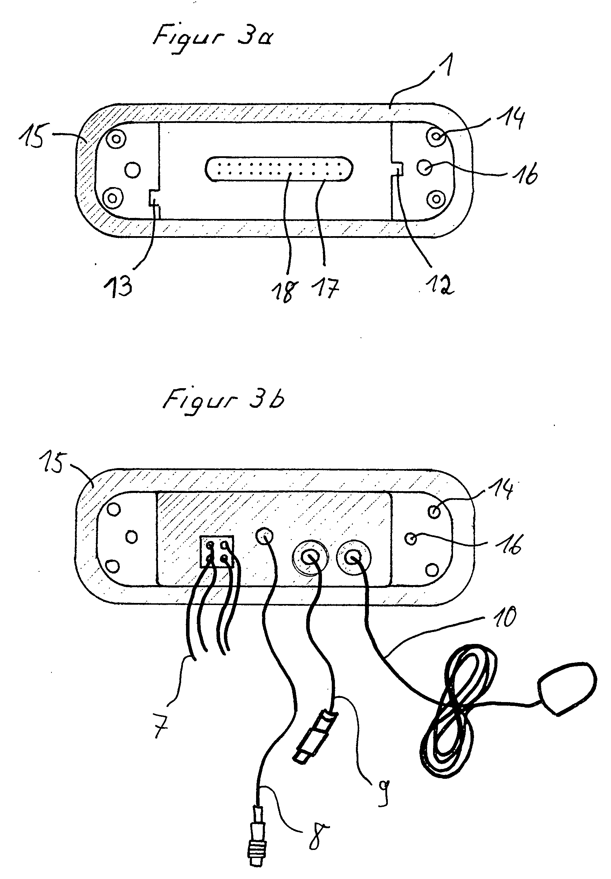

- Fig. 3: eine perspektivische Ansicht der Box der Anschlußeinheit der Fig. 1;
- Fig. 3a: eine Vorderansicht auf die Box der Fig. 3, und
- Fig. 3b: eine Rückansicht auf die Box de Fig. 3.

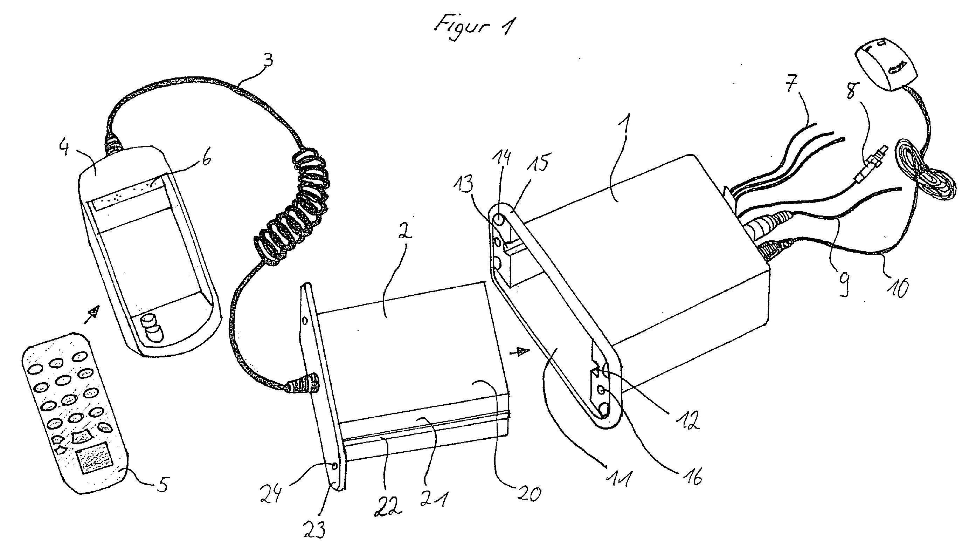

Figur 1 zeigt schematisch eine erfindungsgemäße Anschlußeinheit mit einer kastenförmigen Box 1 aus Kunststoff, in die ein Stecker 2 im wesentlichen formschlüssig einfügbar ist. Der Stecker 2 ist über ein Kabel 3 mit einem spiralförmigen Abschnitt mit einem Telefonhalter 4 für ein Mobiltelefon 5 verbunden. Hierfür ist an dem Telefonhalter 4 eine Anschlußleiste 6 für das Mobiltelefon 5 vorgesehen. In dem Kabel 3 sind dabei die einzelnen Leitungen für den Anschluß des Mobiltelefons 5 an eine Antenne, ein Mikrofon, einen Lautsprecher und eine Versorgungsleitung aufgenommen.

Der Stecker 2 ist im wesentlichen kastenförmig mit einer breiten Oberfläche 20 ausgebildet und umfasst innen eine nicht dargestellte Platine mit Leitungen, Widerständen und anderen elektrischen und elektronischen Bauteilen, die zur Anpassung der Signale des Mobiltelefons 5 notwendig sind, damit dieses mit der Freisprecheinrichtung des Fahrzeuges koppelbar ist. Der Stecker 2 umfasst eine Leiste mit Kontaktelementen, die mit der Platine verbunden sind.

Die Box 1 ist ebenfalls im wesentlichen kastenförmig ausgebildet und weist eine offene Stirnseite 11 auf, in die der Stecker 2 einfügbar ist. An der gegenüberliegenden Seite zu der offenen Stirnseite 11 ist ein Stecker 17 mit Kontaktelementen 18, vorzugsweise ein standardisierter 24-poliger Stecker 17 mit Stiften 18 angeordnet. Die Kontaktelemente 18 sind auf der nach außen gewandten Seite der Box 1 mit Leitungen 7, 8, 9, und 10 zum Anschluß an ein Audio-System, eine Antenne und eine Versorgungsquelle verbunden. Die Verbindung an der Außenseite der Box 1 kann entweder dadurch erfolgen, dass die Leitungen schon vormontiert an der Box 1 angebracht sind und dann nur noch vom Fahrzeughersteller verlegt werden müssen, und/oder es können auch Steckkontakte zum Anschluß der Leitungen 7, 8, 9, 10 vorgesehen sein.

Am Stecker 2 sind an die schmalen Seiten 21 in Einschubrichtung verlaufende Führungsleisten 22 ausgebildet, die in entsprechende Führungsnuten 12 und 13 der Box 1 eingreifen. Die beiden Führungsleisten 12 und 13 sind zu einer in Einschubrichtung verlaufenden Mittelachse asymmetrische angeordnet, so dass ein fehlerhaftes Einfügen des Steckers 2 sicher vermieden wird. Es ist auch möglich, Führungsnuten am Stecker 2 auszubilden und Führungsleisten an der Box 1 vorzusehen. Statt der Führungsleisten können auch andere Führungselemente, wie Vorsprünge etc. vorgesehen sein.

Beim Einfügen des Stecker 2 gelangen die Kontaktelemente des Steckers 2 in Eingriff mit den Kontaktelementen 18 der Box 1 und ermöglichen so eine Nutzung der Freisprecheinrichtung des Fahrzeuges. Um ein ungewolltes Lösen des Steckers 2 während der Fahrt zu vermeiden, weist die Box 1 einen hervorstehenden Flanschabschnitt 15 auf, an dem Öffnungen 14 zur Festlegung der Box 1 in einem Fahrzeug vorgesehen sind. Ferner sind Öffnungen 15 vorgesehen, die mit Öffnungen 24 in einer Frontplatte 23 des Steckers 2 fluchten. In die Öffnungen 24 und 16 sind Befestigungsmittel in Form von Rändelschrauben einfügbar, die in Schraubkanäle in der Fahrzeugverkleidung oder der Box 1 festgelegt werden können.

Falls die Freisprecheinrichtung des Fahrzeuges durch ein Mobiltelefon 5 eines anderen Typs bzw. Herstellers genutzt werden soll, wird der Stecker 2 einfach aus der Box 1 abgezogen und ein anderer auf das neue Mobiltelefon 5' angepaßter Stecker 2' in die Box 1 eingefügt. Der Stecker 2' kann dabei dieselbe Außenkontur wieder gezeigte Stecker 2 aufweisen, jedoch ist das Innenleben des Steckers 2' mit der Platine auf das neue Mobiltelefon 5' angepaßt.

Die Box 1 ist vorzugsweise schon im Fahrzeug vormontiert, damit der Käufer des Fahrzeuges lediglich noch den für sein Mobiltelefon 5 passenden Stecker 2 und den Telefonhalter 4 erwerben muß, um die Freisprecheinrichtung zu nutzen. Es entfallen lange Warte- und Lieferzeiten, da die Stecker 2 kurz nach Markteinführung eines neuen Mobiltelefons 5 bereitgestellt werden können.

Die Montage der Box 1 kann beispielsweise im Handschuhfach auf der Beifahrerseite eines Fahrzeuges erfolgen, so dass die Anschlußeinheit mit dem Telefonhalter 4 nicht sichtbar verstaut werden kann. Wenn das Handschuhfach eine abschließbare Klappe umfasst, können Anschlußeinheit und Telefonhalter verdeckt und gesichert angeordnet werden. Für die Benutzung der Freisprechanlage wird dann der Telefönhalter 4 in dem Fahrzeug montiert, beispielsweise mittels eines Rastmechanismusses an einer Mittelkonsole, wobei dann an der Klappe des Handschuhfaches oder einer benachbarten Wand eine Durchführung für die Leitungen 3 zur Verbindung mit dem Stecker 2 vorgesehen ist.

## Patentansprüche

1. Anschlußeinheit für eine Freisprecheinrichtung, insbesondere für Fahrzeuge, mit einer in einem Fahrzeug montierbaren Box (1), die über Leitungen (7, 8, 9, 10) mit einem Audiosystem, einer Antenne und einer Versorgungsquelle verbindbar ist und entsprechende Kontaktelemente aufweist, **dadurch gekennzeichnet, daß** ein mobiltelefonspezifischer Stecker (2) mit den Kontaktelementen (18) der Box (1) verbindbar ist, wobei der Stecker (2) über Leitungen (3) mit einem Telefonhalter (4) verbunden ist.

2. Anschlußeinheit nach Anspruch 1, **dadurch gekennzeichnet, daß** der Stecker (2) im wesentlichen formschlüssig in der Box (1) aufgenommen ist.

3. Anschlußeinheit nach Anspruch 1 oder 2, **dadurch gekennzeichnet, daß** die Box (1) kastenförmig mit einer offenen Stirnseite (11) ausgebildet ist, in die der Stecker (2) einfügbar ist.

4. Anschlußeinheit nach Anspruch 3, **dadurch gekennzeichnet, daß** die Kontaktelemente (18) der Box (1) an der der offenen Stirnseite (11) gegenüberliegenden Seite angeordnet sind.

5. Anschlußeinheit nach einem der Ansprüche 1 bis 4, **dadurch gekennzeichnet, daß** an der Box (1) zum Anschluß des Steckers (2) eine Anschlußleiste, vorzugsweise in der Form eines 24-poligen Steckers (17), vorgesehen ist.

6. Anschlußeinheit nach einem der Ansprüche 1 bis 5, **dadurch gekennzeichnet, daß** an der Box (1) oder dem Stecker (2) mindestens eine in Einschubrichtung verlaufende Führungsleiste (22) vorgesehen ist, die in eine gegenüberliegende an dem Stecker (2) oder der Box (1) angeordnete Führungsnut (12, 13) eingreift.

7. Anschlußeinheit nach einem der Ansprüche 1 bis 6, **dadurch gekennzeichnet, daß** der Stecker (2) senkrecht zur Einschubrichtung eine asymmetrische Querschnittsform aufweist.

8. Anschlußeinheit nach einem der Ansprüche 1 bis 7, **dadurch gekennzeichnet, daß** der Stecker (2) an der Box (1) verriegelbar gehalten ist.

9. Fahrzeug, insbesondere Kraftfahrzeug, mit einer Freisprecheinrichtung, **dadurch gekennzeichnet, daß** die Freisprecheinrichtung über eine Anschlußeinheit nach einem der vorhergehenden Ansprüche mit dem Audio-System des Fahrzeuges gekoppelt ist.

10. Fahrzeug nach Anspruch 9, **dadurch gekennzeichnet, daß** die Box (1) der Anschlußeinheit in einem Handschuhfach des Fahrzeuges montiert ist.

11. Fahrzeug nach Anspruch 10, **dadurch gekennzeichnet, daß** die Anschlußeinheit mit dem Telefonhalter (4) abschließbar in dem Handschuhfach aufgenommen ist.
